# EUROPEAN PATENT SPECIFICATION

(11) **EP 4 172 111 B1**
(45) Date of publication and mention of the grant of the patent: **04.11.2026**
(21) Application number: 21732542.2
(22) Date of filing: 04.06.2021
(51) Int. Cl.: C02F 1/44, C02F 103/08

(54) **LARGE SCALE DESALINATION PROCESS**
ENTSALZUNGSVERFAHREN IM GROSSMASSSTAB
PROCÉDÉ DE DESSALEMENT À GRANDE ÉCHELLE

(30) Priority: 25.06.2020 GB 202009700; 26.03.2021 GB 202104269
(43) Date of publication of application: 03.05.2023
(60) Divisional application: 24199154.6 / 4 455 100
(73) Proprietor: IDE WATER TECHNOLOGIES LTD., 6092000 Kadima (IL)
(72) Inventor: TAVOR, Alon, 6092000 (IL); SHTELMAN, Gregory, 609200 (IL); LIBERMAN, Boris, 6092000 (IL)
(74) Representative: Lees, Kate Jane
(86) International application number: PCT/IB2021/054899
(87) International publication number: WO 2021/260464

(56) References cited:
- WO-A1-2010/052713
- CN-U- 210 103 516
- US-A1- 2009 110 563
- US-A1- 2018 339 916
- DOW: "Tech Manual Excerpt FILMTEC Membranes System Operation: Initial Start-Up", 1 November 2016 (2016-11-01), XP055913434, Retrieved from the Internet <URL:https://pureaqua.com/content/pdf/filmtec-membranes-system-operation-initial-start-up.pdf> [retrieved on 20220419]

## Description

### Field of the Invention.

The present invention relates generally to a water treatment process, in particular a large scale desalination treatment process.

### Background

Desalination involves the removal of dissolved salts from seawater and in some cases from the brackish (slightly salty) waters of inland seas, highly mineralized groundwaters (e.g., geothermal brines), and municipal wastewaters. This process makes such waters fit for human consumption, irrigation, industrial applications, and various other purposes.

Various processes exist for desalting such waters but reverse osmosis systems are the most widely used. In reverse osmosis, salt water is forced against membranes under high pressure, with fresh water passing through the membranes while concentrated mineral salts remain behind. The membranes are packaged into multiple layers in a collection of long tubes. However, this type of technology requires a substantial amount of energy. Larger scale facilities can lower the cost of the desalted water but a significant amount of electricity is still required to drive the pumps to force the salt water through the reverse osmosis membranes.

Generally, a large amount of electricity has to be supplied to the plant to power the desalination process. In some instances, power plants are built adjacent desalination plants to specifically generate and supply electricity to drive the high pressure pumps of the desalination process.

Demand is increasing for ever larger plants producing more water, including mega-size desalination plants, producing at least 100,000 m³/day, ideally more than 600,000 m³/day of potable water. The concept of several, identical reverse osmosis (RO) trains is not suitable for such mega-sized plants. In this respect, each of the RO trains includes a high-pressure pump, energy recovery turbine and membranes. Enlargement of these components leads to contradictions between their optical sizes.

Scale up benefits are unable to be obtained with such oversized RO trains. Instead, it is necessary to switch from local high pressure pumping to each RO train below 1000kW to a "pressure centre" approach using a 6000kW pump or more. All of these mega-sized plants that use this approach, such as the Ashkelon, Hadera and Soreq-1 plants in Israel and Carlsbad in the USA, use electricity as the energy source.

However, electricity as an energy source has a critical limitation which prevents efficient operation of mega-size desalination plants. The limitation is that electricity has only one variable, being its frequency which is applied to control motor and pump rotation. The frequency may be changed between about 30 to 60 Hz, causing a corresponding change in pump rotation between 1500-3600 RPM. This minimal variation is not enough to compensate for the widely changing conditions presented in relation to the operation of the plant, relating to the raw water condition, membrane ageing and the water quantity required.

The condition of the raw feed water varies significantly on a daily basis due to tidal variations. Salinity can change from 1000ppm to 40,000ppm twice a day between high and low tides, causing a change in osmotic pressure of the raw water from about 1 bar to about 30 bar. Temperature changes between winter and summer months from around 1°C to about 35°C bring about an additional variation in pressure of around 10 bars. Membrane aging, such as fouling of the membrane, can also lead to a further pressure variation of about 7 bar and the demand for water can vary by more than 50% between the winter and summer periods. All these variations must be covered by the high pressure pumps. Different sizes and numbers of electrically-driven pumps have been installed to try to address these variations but this is undesirable, requiring additional booster pumps to be installed and then removed depending upon conditions.

Furthermore, the pump efficiency is dependent upon specific pump feed, with a higher pump speed providing a higher efficiency. However, electrically driven pumps are limited to a speed of 3600 RPM which is applied at the maximum frequency of 60Hz.

These electrically driven pumps can also damage the membranes during start-up of the process due to pump rotation being too high. In this respect, the small range of operation of the pump provided using electricity can result in too high a pressure being applied too quickly to the membrane, causing membrane sagging between fibres that extend between the feed and permeate side of the membrane, reducing the life of the membrane. A valve may be installed in the high pressure pump discharge outlet which may open slowly. However, the dissipation of about 1MW energy in about 60 seconds means that the life of the valve is very short. Specialist valves with variable Cv value may be incorporated into the system but these are extremely expensive and may still suffer damage over time. Some relevant documents are WO 2010/052713 A1, CN 210 103 516 U, US 2018/339916 A1, US 2009/110563 A1, XP055913434 - DOW - Tech Manual Excerpt - Filmtec Membranes - November 2016; https://pureaqua.com/content/pdf/filmtec-membranes-system-operation-initial-start-up.pdf.

It is desirable to be able to operate pumps of a large scale desalination plant or process in a more flexible manner, thereby enabling the pumps to adapt to the widely changing conditions presented in relation to operation of the plant.

It is the aim of the present invention to provide an improved desalination process and desalination plant that overcomes, or at least alleviates, the abovementioned problems.

### Summary of the Invention

According to the present invention there is provided a method of desalting feed water as set out in the appended claims. The method comprises passing feed water through a high pressure pump driven by at least one steam turbine capable of producing at least 1 MW of energy, the pressurized feed water passing through at least one reverse osmosis membrane to provide a residual brine stream and a product water, the method further comprising a step of controlling the operational pressure of the high pressure pump by altering the pressure provided by the at least one steam turbine, the high pressure pump being configured to rotate between 500-5000 rpm dependent on the pressure applied by the steam turbine to compensate for fluctuations in pressure and flow, wherein a lower operating speed is provided in response to lower pressure and flow requirements brought about by one or more conditions selected from low salinity, low water temperature and low demand for water and wherein a higher operating speed is provided in response to higher pressure and flow requirements brought about by one or more conditions selected from high salinity, high water temperature, a fouled membrane and high demand for water, the method further comprising a start-up step wherein the feed pressure is increased at a maximum rate of 12 psi (8.3 Newtons/cm²; 0.08MPa) per second by rotation of the turbine driven high pressure pump to slowly increase pressure on the membrane to a predetermined operation pressure.

The slow increase in pressure provided by the turbine driven pump during the start-up step prevents or reduces damage to the membrane. Importantly, the step removes the need to include a valve to reduce pressure applied in the start-up step. However, it is to be appreciated that a valve may be included but due to the slow increase in pump rotation provided by a stream turbine during the start-up step, the valve will be less vulnerable to damage. More preferably, the feed pressure increase during start up is equal to or less than 10 psi (6.9 Newtons/cm²; 0.07 MPa) per second to achieve a soft start provided directly by a slow rate of rotation of the turbine driven high pressure pump at a maximum rate of 30 RPM, more preferably 25 RPM.

The method is preferably carried out in a large scale water desalination system for producing at least 100,000 m³/day of product water, the system comprising a plurality of feed water inlets, each feed water inlet being connected to at least one high pressure pump to drive feed water through at least one reverse osmosis membrane, the system further comprising at least one residual brine water outlet and at least one product water outlet and wherein the at least one high pressure pump is powered from a non-electrical source which includes at least one steam turbine capable of producing at least 1 MW of energy.

Preferably, the desalination system for carrying out the process of the invention is a mega-size desalination system for producing at least 100,000 m³/day of potable water, more preferably at least 250,000 m³/day of potable water, more preferably still at least 600,000 m³/day of potable water, especially at least 800,000 m³/day of potable water.

The water desalination system preferably has multiple high pressure pumps powered by steam turbines. However, the process may incorporate a mixture of electrical and non-electrical sources. More preferably, at least 25% of the energy source and more than 10 MW, preferably more than 50 MW is from a natural energy source such as natural gas or LNG gas and preferably, at least 50% of high pressure pumps, more preferably all high pressure pumps, are powered by a non-electrical power source in the form of a steam turbine.

The operating pressure of the high pressure pumps is controlled by altering the steam pressure provided by the at least one steam turbine. In this manner, the at least one steam turbine is used to compensate for the variable conditions of the feed water. The steam turbine operated pump is configured to rotate between 500 RPM to 5000 RPM dependent on the pressure applied by the steam turbine. This provides for a much more flexible and responsive process and system than those powered by electricity which are only able to vary rotation between 1500 to 3600 RPM based on a frequency of 30-60Hz. The operating pressure may be controlled by one or more controllers to control the pressure applied by the steam turbine to the at least one high pressure pump, for example the output of each steam turbine may be controlled automatically by a given input relating to a condition of the feed water or volume of feed water required.

It is to be appreciated that a mega-size desalination system would have multiple inlets, steam turbines, high pressure pumps and reverse osmosis membranes to provide the required daily output of product water. This size of system enables a steam turbine of at least 1MW, preferably at least 5MW to be utilised effectively.

Preferably the system for carrying out the process includes a plurality of pressure vessels containing multiple reverse osmosis membranes which are pressurized by multiple steam turbines, each having a capacity of at least 1MW. More preferably, multiple stages of pressure vessels are provided in multiple trains to provide the required output capacity of the plant. Separate or multiple high pressure pumps may be provided but preferably at least one pressure centre is provided having an output of at least 6000 kW per centre. Preferably, at least two pumps are connected to each steam turbine, preferably being connected to opposing sides of the steam turbine.

The feed water may be treated prior to entering the system in a known matter, for example by ultrafiltration. The product water may also be post-treated. Preferably, the pressure applied by the steam turbine is adjustable dependent upon one or more variable conditions of the feed water and/or the volume of feed water required.

The process according to the invention optionally includes a flushing step prior to the start-up step to remove any air in the system. During the flushing step, the turbine driven high pressure pump is rotated at a rate of 300-800 RPM, thereby evacuating air from the system with a low pressure of less than 5 Bar (0.5MPa; 50 N/cm²), more preferably, the flushing step is carried out for 30-60 minutes, preferably 45 minutes.

### Brief Description of the Drawings

For a better understanding of the present invention and to show more clearly how it may be carried into effect, reference will now be made by way of example only to the accompanying drawings in which:
Figure 1 is a schematic diagram comparing a mega-size reverse osmosis system driven by steam turbines for carrying out a process according to the present invention and a mega-size reverse osmosis system driven by electricity according to the prior art;
Figure 2 is a schematic diagram illustrating a mega-size reverse osmosis system driven by a steam turbine driven from steam generated in a designated boiler for carrying out the process according to an embodiment of the present invention;
Figure 3 is a schematic diagram illustrating a mega-size reverse osmosis system driven by a steam turbine driven from steam generated in a designated boiler for carrying out the process according to another embodiment of the present invention; and
Figure 4 is a process flow diagram for a mega-size desalination plant driven by steam turbines for carrying out a process according to the present invention; and
Figure 5 is graph of pressure versus time of the feed to the RO membrane.

### Detailed Description

The present invention relates to the replacement of at least 50%, preferably up to 100% of the electrical power source that is conventionally used to drive high pressure pumps for feeding raw water through reverse osmosis membranes of a mega-size desalination plant with steam turbines to provide a process for desalination that is able to provide extreme variations in pressure to the membrane, from medium pressures during a flushing step, to low pressures during a start-up step to variable high pressures required during an operational step but being dependent upon conditions of the feed water supplied and/or the volume of product water required.

In the context of this disclosure, a "mega-size" desalination plant is a plant that produces at least 100,000 m³/day, ideally more than 600,000 m³/day of potable water. Such a mega-size plant requires a substantial amount of power to operate the high pressure pumps. Normally, this power is provided by electricity supplied via electrical cables to the pumps. However, such a power source has only limited variability, relying on a change of frequency between 30-60 Hz to alter the rotation of the high pressure pump between 1500 and 3600 RPM. Furthermore, mega-size plants often employ a pressure centre wherein each pump is required to operate at 6000 kW or more rather than the smaller pumps used for local high pressure pumping that operate at below 1000 kW.

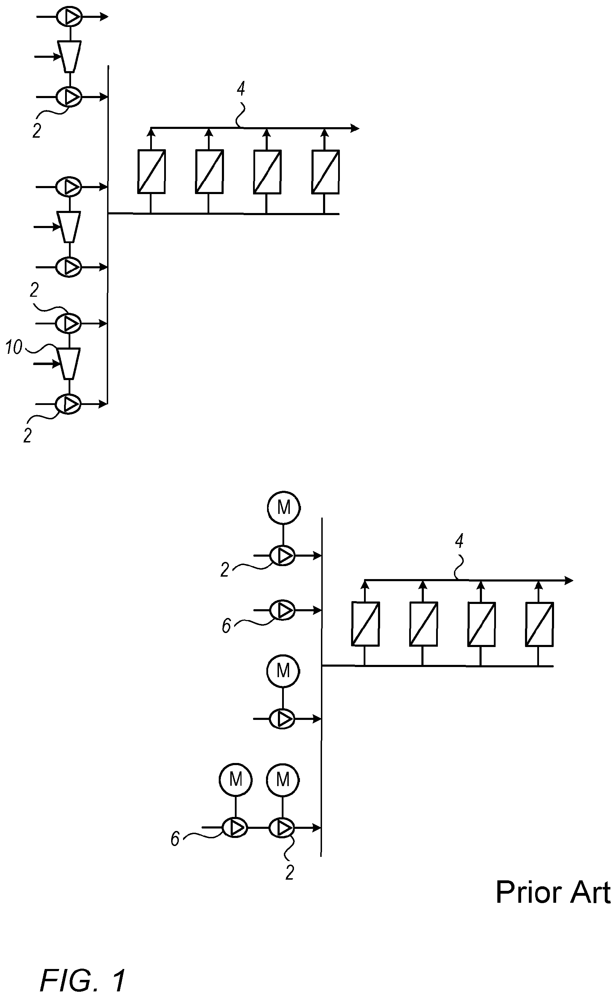

Figure 1 of the accompanying drawings compares the prior art operation of a mega-size plant (below diagonal line) with that used to provide a process according to the present invention (above diagonal line). Electricity powers the individual pumps 2 which drive high pressure water through the reverse osmosis trains 4. Conditions vary tremendously in relation to the operation of the plant, relating to the raw water condition, membrane ageing and the water quantity required as this is to some extent addressed by varying the frequency of power to the pumps or my adding or removing booster pumps 6 to the system. However, the change of frequency provides for only a limited variation and adding or removing pumps from operation decreases the efficiency of the operation of the plant. As a result, electrical powering of the pumps does not compensate for the widely varying conditions brought about by daily tidal variations, seasonal temperature changes, membrane aging and variation in demand for water. The system and process of the present invention replaces electrical power with steam turbines 10 to power one or multiple high pressure pumps 2 for driving high pressure water through the RO trains.

This steam control is applicable only to mega size RO systems where a single motor is greater 1 MW, preferably greater than 5 MW as otherwise the reduction in efficiency would outweigh the benefits provided by the flexibility of the steam turbines. The incorporation of steam turbines into such installations requires sophisticated infrastructure and very precise alignment with desalination water pumps driven by the steam turbines. The provision of steam turbines in a mega-size plants enables operation of the plant to compensate effectively for the change in conditions due to the ability to control steam pressure and flow. Steam turbine operated pumps can be varied in speed from 500 RPM to 5000 RPM compensating for the significant fluctuations in pressure and flow. This enables to the plant to operate more efficiently and removes the need to add and remove pumps to the system depending upon the prevailing conditions. Furthermore, it is possible to achieve larger steam turbine capacity by connecting the pumps to both sides of each steam turbine, as illustrated in the diagram of Figure 1.

The steam turbine operated pumps may be operated at 500 RPM if required. The lower operation speed may be required in response to lower pressure and flow requirements. For example, one or more conditions such as low salinity, low water temperature, a clean membrane and low demand for water can combine to produce a lower required operating speed.

Conversely, the steam turbine operated pumps may be operated at 5000 RPM if required. The higher operation speed may be required in response to higher pressure and flow requirements. For example, one or more conditions such as high salinity, high water temperature, a fouled membrane and high demand for water can combine to produce a higher required operating speed.

Environmental benefits are also obtained by the replacement of electrical power with energy from steam turbines. The higher RPM obtainable with steam turbines increases the efficiency of the pump and less power is required for the same work, reducing the levels of carbon dioxide discharged into the atmosphere. The steam turbine also allows direct conversion between gas and torque, avoiding conversion to electricity with related energy losses. Furthermore, gas combustion and conversion to steam on the desalination site enables conversion of about 50 g of carbon dioxide into bicarbonate for each cubic metre of produced water. Thus, for a mega-size desalination plant producing 800,000 m³/day, it is 40,000 kg per day of carbon dioxide converted into bicarbonate in the drinking water produced.

The high pressure pumps that are driven by steam turbines enable the process to provide a start-up mode where a slow increase in pressure is applied to the membrane, preventing damage to the membrane and removing the need for a pressure release valve. In small systems, a pressure release valve is able to cope with the pressures applied but in a large system, in particular a mega-size plant, the valve is unable to dissipate the large amount of energy quickly enough and the life of the valve will be very short. In the present process, the turbine driven high pressure pump enables an increase in pressure of less than 12 psi (8.3 Newtons/cm²; 0.08MPa) per second, preferably less than 10 psi (6.9 Newtons/cm²; 0.07 MPa) per second, especially 5 psi (3.45 Newtons/cm²; 0.03 MPa) per second. This slow increase in pressure prolongs the life of the membrane by around 5 years as otherwise the membrane would be subject to sagging between fibres of the feed and permeate sides of the membrane. Furthermore, it removes the need for a pressure release valve or, if a valve is provided, extends the life of the valve.

For example, for a desalination process, the working pressure may be 75 bar (about 1155 psi or 7.96 MPa). The start-up step must increase the feed pressure from 0 MPa to 7.93 MPa (0 to 1150 psi) within 116 seconds. In the prior art processes, the pump is operated by an electrical motor and equipped with Variable Frequency Drive (VFD). The pump is not able to increase rotation from 0 RPM to 3000 RPM in linear slope of 25 RPM in each second. In contrast, the start-up step of the process of the invention uses a turbine driven pump that can provide such a linear slope of 25 RPM per second. The steam turbine driven pump may capable of starting at 0 RPM and increasing speed linearly by 25 RPM per second. The steam turbine driven pump may increase speed linearly in this way from 0 RPM to 1150 RPM. In some examples, the steam turbine driven pump may increase speed linearly in this way from 0 RPM to 3000 RPM.

With an electrical motor driven pump, the motor must initially start from 0 RPM to minimum 900RPM within 1-2 seconds. This means that in 2 second the pressure will rise to 347 psi (2.4 MPa), i.e. 173 psi (1.2 MPa) per second. After motor reaches 900 RPM, the increase to 3000 rpm VFD can be made slowly but the problem is in the initial 0-900RPM, which an electrical motor cannot achieve slowly. A valve may be provided between pump and membrane to diminish the pressure slope. However, this is only satisfactory for small pumps. A large pump 1000-6000kW, such as that utilized in mega-sized plants, a valve approach does not work well, because the valve should dissipate 300 to 1600kW on its shaft. A valve cannot do this for a reasonably long time without damage. In contrast, a steam turbine used in the process of the present invention can open steam valve slowly from beginning and slowly increase the pump rotation.

For the flushing mode prior to start-up, air and foam cannot be evacuated from membrane by any other way than flushing out air with low pressure 1-4 bar (0.1 - 0.4 MPa) for around 45 minutes. In the process of the present invention this too can be achieved by varying the rotation of the HPP pump driven by the steam turbine, to provide a rotation of between 300 to 800 RPM. Again, this is not possible with a pump driven by an electrical motor.

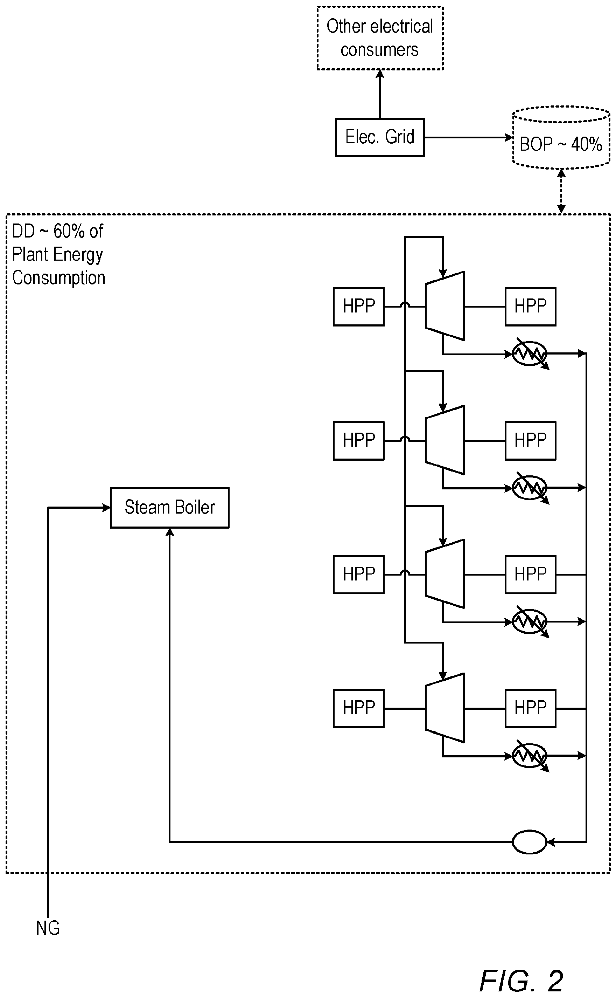

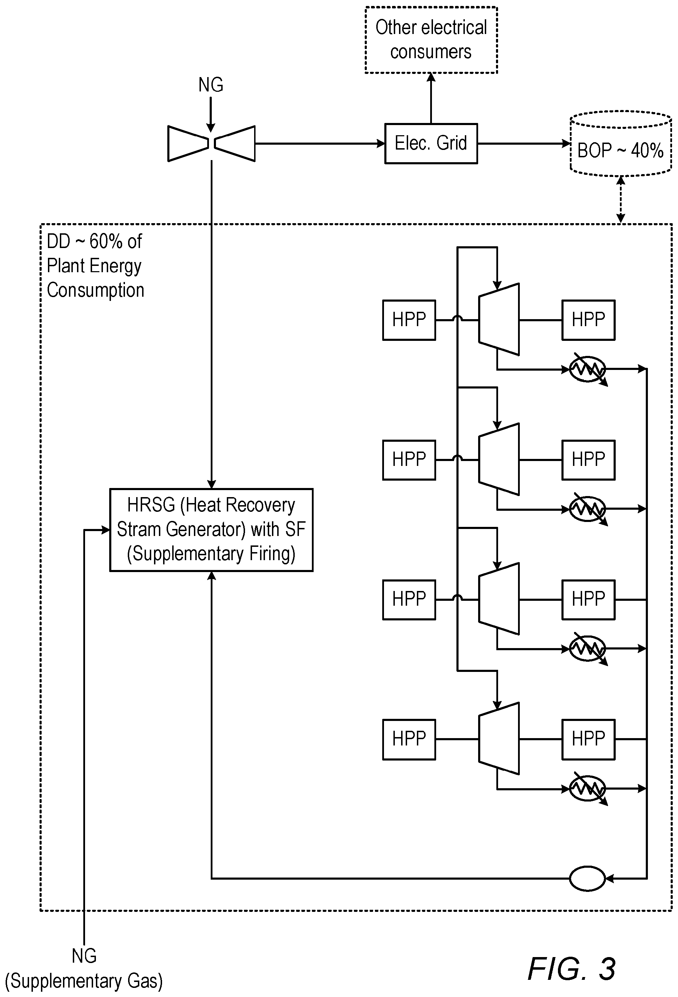

Figures 2 and 3 of the accompanying drawings illustrate examples for the production of steam for supplying the multiple steam turbines of a mega-size RO system for carrying out the process according to the invention. Figure 2 has steam generated in a designated steam boiler and Figure 3 uses a heat recovery steam generator. However, it is to be appreciated that the invention is not limited to a particular source of steam for the turbines.

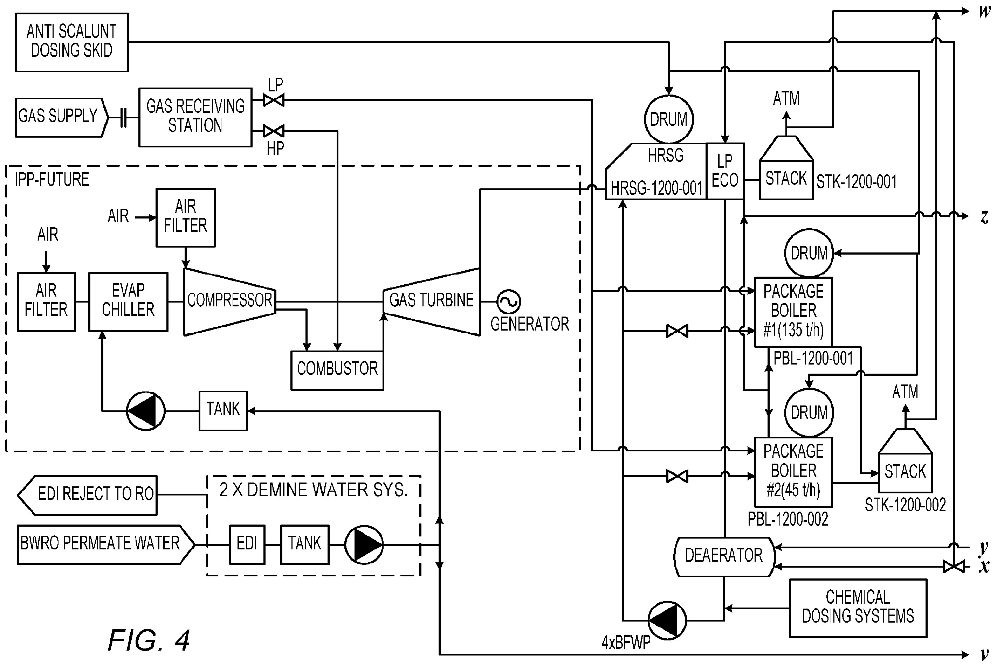

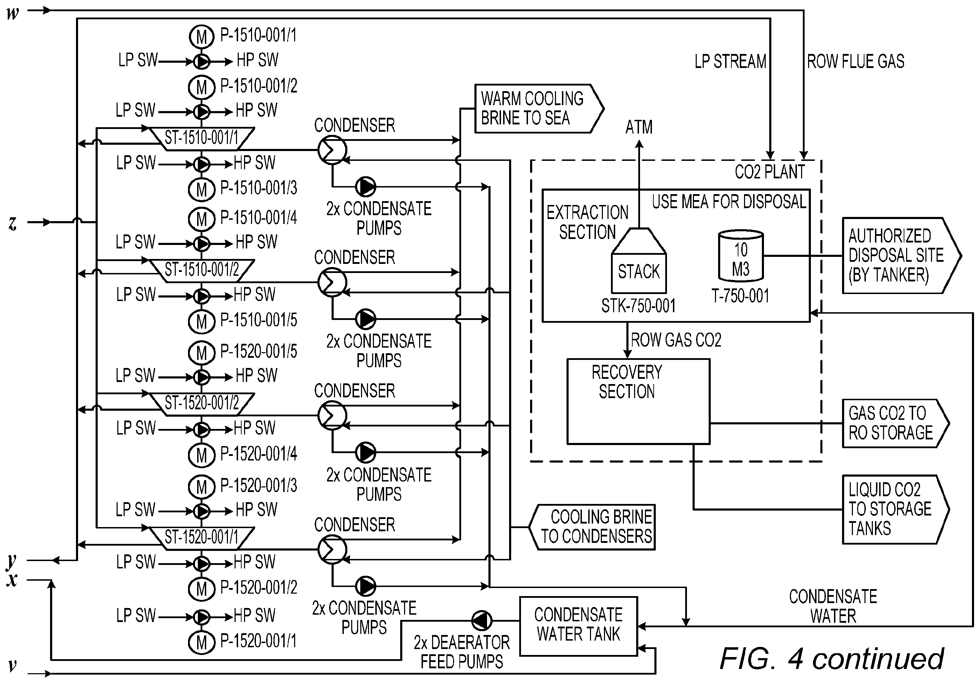

Figure 4 illustrates a flow diagram of one embodiment of a reverse osmosis desalination plant provided with steam turbines according to the present invention. Gas turbine (GT) generating electricity at full capacity for the self-consumption of the desalination plant. Excessive electrical power is directed to the national electrical grid. Hot exhaust of the GT is directed to HRSG (heat recovery steam generator) to generate steam. The steam generated at the HRSG is then used to drive steam turbine coupled to the high pressure pumps (HPP) through gear box used to feed the SWRO membranes with high pressure seawater. These pumps are responsible for up to about 50% of the desalination plant power demand.

The HRSG generate steam relative to the GT exhaust rate. For meeting the water demand with the steam turbine driven HPP gas fired boilers (package boilers) are installed. The steam generated at the package boilers is discharged at common header. The amount of steam generated at the package boilers is controlled by the water flow demand.

The desalination plant consumes a relatively large amount of CO2 in the post treatment process. The exhaust of the boilers is partly directed to a CO2 extraction plant. In the CO2 extraction plant CO2 from the boilers exhaust is extracted and liquified to supply the needs of the desalination plant.

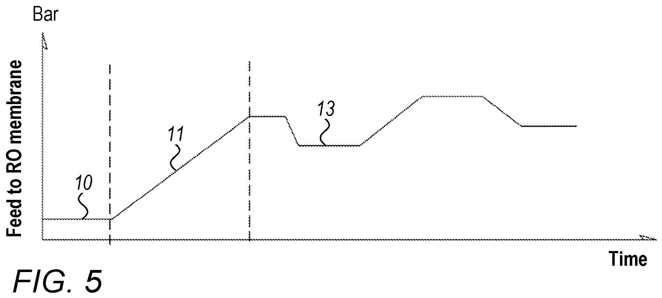

Figure 5 of the accompanying drawings illustrates the pressure build-up during flushing, start-up and normal operation of the desalination plant. Air is evacuated from the system at 10 with a slow rotation pressure of 3-5 bar, and then there is a slow pressure increase at 11 from 5 bar to 70 bar to slowly ramp up by 69 kPa per second (10 psi per second). A consistently higher pressure is then used at 13 for normal operation, with some variations in pressure dependent upon feed temperature, equipment status and client request for product quality. This huge variations in pressure are all achieved by the high pressure pumps driven by turbines.

It is to be appreciated that modifications to the aforementioned plant and process may be made without departing from the scope of the appended claims.

## Claims

1. A method of desalting feed water, the method comprising passing feed water through a high pressure pump driven by at least one non-electrical power source comprising at least one steam turbine capable of producing at least 1 MW of energy, the pressurized feed water passing through at least one reverse osmosis membrane to provide a residual brine stream and a product water, the method further comprising a step of controlling the operational pressure of the high pressure pump by altering the pressure provided by the at least one steam turbine, the high pressure pump being configured to rotate between 500-5000 rpm dependent on the pressure applied by the steam turbine to compensate for fluctuations in pressure and flow, wherein a lower operating speed is provided in response to lower pressure and flow requirements brought about by one or more conditions selected from low salinity, low water temperature and low demand for water and wherein a higher operating speed is provided in response to higher pressure and flow requirements brought about by one or more conditions selected from high salinity, high water temperature, a fouled membrane and high demand for water, the method further comprising a start-up step wherein the feed pressure is increased at a maximum rate of 12 psi (8.3 Newtons/cm²; 0.08MPa) per second by rotation of the turbine driven high pressure pump to slowly increase pressure on the membrane to a predetermined operational pressure.

2. The method according to claim 1 wherein the feed pressure increase during start up is equal to or less than 10 psi (6.9 Newtons/cm²; 0.07 MPa) per second to achieve a soft start provided directly by a slow rate increase of rotation of the turbine driven high pressure pump, preferably at a maximum rate of 30RPM during start-up.

3. The method according to any one of the preceding claims, wherein the feed water is driven through multiple reverse osmosis membranes by multiple high pressure pumps powered by the non-electrical sources comprising at least one steam turbine.

4. The method according to any preceding claim wherein the operating pressure of each high pressure pump is controlled by altering the steam pressure provided by the at least one non-electrical source comprising at least one steam turbine.

5. The method according to claim 4, wherein one or more controllers are provided to control the pressure applied by each non-electrical source comprising at least one steam turbine to the at least one high pressure pump.

6. The method according to claim 5 wherein the output of each steam turbine is controlled automatically by a given input relating to a condition of the feed water or volume of feed water required.

7. The method according to any preceding claim, wherein each steam turbine provides at least 5MW of energy.

8. The method according to any one of the preceding claims, further comprising a flushing step prior to the start-up step, the flushing step comprising rotating the turbine driven high pressure pump at a rate of 300-800 RPM to provide an air evacuation pressure of less than 5 Bar (0.5MPa; 50 N/cm²).

9. The method according to claim 8 wherein the flushing step is carried out for 30- 60 minutes.

10. The method according to any one of the preceding claims, wherein the feed water is driven through multiple reverse osmosis membranes by multiple high pressure pumps.

11. The method according to any one of the preceding claims, wherein the output of said non-electrical source is controlled by a given input relating to a condition of the feed water or volume of feed water required.

12. The method according to any one of claims 2 to 11, wherein the maximum rate of rotation of the turbine driven high pressure pump during the start-up step is 25 RPM.

13. The method according to any one of the preceding claims, wherein the high pressure pump increases rotation linearly by 25 RPM per second.

## Patentansprüche

1. Verfahren zur Entsalzung von Speisewasser, wobei das Verfahren das Weiterleiten von Speisewasser durch eine Hochdruckpumpe umfasst, die durch mindestens eine nicht-elektrische Energiequelle angetrieben wird, die mindestens eine Dampfturbine umfasst, die mindestens 1 MW an Energie erzeugen kann, wobei das unter Druck stehende Speisewasser durch mindestens eine Umkehrosmose-Membran geleitet wird, um einen verbleibenden Salzlösungsstrom und ein Produktwasser bereitzustellen, wobei das Verfahren weiter einen Schritt des Regelns des Betriebsdrucks der Hochdruckpumpe durch Änderung des Drucks umfasst, der von der mindestens einen Dampfturbine bereitgestellt wird, wobei die Hochdruckpumpe zur Drehung zwischen 500-5000 UpM in Abhängigkeit von dem Druck, der von der Dampfturbine ausgeübt wird, konfiguriert ist, um Schwankungen des Drucks und Flusses auszugleichen, wobei eine niedrigere Betriebsdrehzahl als Reaktion auf niedrigere Druck- und Flussanforderungen bereitgestellt wird, die durch eine oder mehrere Bedingungen herbeigeführt werden, die aus niedrigem Salzgehalt, niedriger Wassertemperatur und geringem Bedarf für Wasser ausgewählt sind, und wobei eine höhere Betriebsdrehzahl als Reaktion auf höhere Druck- und Flussanforderungen bereitgestellt wird, die durch eine oder mehrere Bedingungen herbeigeführt werden, die aus hohem Salzgehalt, hoher Wassertemperatur, einer verunreinigten Membran und hohem Bedarf für Wasser ausgewählt sind, wobei das Verfahren weiter einen Startschritt umfasst, wobei der Speisedruck bei einer maximalen Rate von 12 psi (8,3 Newton/cm²; 0,08 MPa) pro Sekunde durch Drehung der Turbinen-angetriebenen Hochdruckpumpe erhöht wird, um den Druck auf die Membran auf einen vorgegebenen Betriebsdruck langsam zu erhöhen.

2. Verfahren nach Anspruch 1, wobei die Speisedruckerhöhung während des Starts gleich oder geringer als 10 psi (6,9 Newton/cm²; 0,07 MPa) pro Sekunde ist, um einen sanften Start zu erreichen, der direkt durch eine langsame Erhöhung der Drehrate der Turbinen-angetriebenen Hochdruckpumpe, bevorzugt bei einer maximalen Rate von 30 UpM, während des Starts bereitgestellt wird.

3. Verfahren nach einem der vorstehenden Ansprüche, wobei das Speisewasser durch mehrere Umkehrosmose-Membranen von mehreren Hochdruckpumpen getrieben wird, die durch die nicht-elektrischen Quellen, die mindestens eine Dampfturbine umfassen, betrieben werden.

4. Verfahren nach einem vorstehenden Anspruch, wobei der Betriebsdruck jeder Hochdruckpumpe durch Änderung des Dampfdrucks geregelt wird, der von der mindestens einen nicht-elektrischen Quelle, die mindestens eine Dampfturbine umfasst, bereitgestellt wird.

5. Verfahren nach Anspruch 4, wobei eine oder mehrere Regler bereitgestellt werden, um den Druck zu regeln, der durch jede nicht-elektrische Quelle, die mindestens eine Dampfturbine umfasst, auf die mindestens eine Hochdruckpumpe ausgeübt wird.

6. Verfahren nach Anspruch 5, wobei der Auslass jeder Dampfturbine durch einen gegebenen Einlass automatisch geregelt wird, der einer Bedingung des Speisewassers oder erforderlichen Volumens des Speisewassers zugeordnet ist.

7. Verfahren nach einem vorstehenden Anspruch, wobei jede Dampfturbine mindestens 5 MW an Energie bereitstellt.

8. Verfahren nach einem der vorstehenden Ansprüche, das weiter einen Spülschritt vor dem Startschritt umfasst, wobei der Spülschritt das Drehen der Turbinen-angetriebenen Hochdruckpumpe bei einer Rate von 300-800 UpM umfasst, um einen Luftevakuierungsdruck von weniger als 5 bar (0,5 MPa; 50 N/cm²) bereitzustellen.

9. Verfahren nach Anspruch 8, wobei der Spülschritt für 30-60 Minuten ausgeführt wird.

10. Verfahren nach einem der vorstehenden Ansprüche, wobei das Speisewasser durch mehrere Umkehrosmose-Membranen von mehreren Hochdruckpumpen getrieben wird.

11. Verfahren nach einem der vorstehenden Ansprüche, wobei der Auslass der nicht-elektrischen Quelle durch einen gegebenen Einlass geregelt wird, der einer Bedingung des Speisewassers oder erforderlichen Volumens des Speisewassers zugeordnet ist.

12. Verfahren nach einem der Ansprüche 2 bis 11, wobei die maximale Rate der Drehung der Turbinen-angetriebenen Hochdruckpumpe während des Startschritts 25 UpM beträgt.

13. Verfahren nach einem der vorstehenden Ansprüche, wobei die Hochdruckpumpe die Drehung linear um 25 UpM pro Sekunde erhöht.

## Revendications

1. Procédé de dessalement d'eau d'alimentation, le procédé comprenant le passage d'une eau d'alimentation à travers une pompe à haute pression entraînée par au moins une source d'énergie non électrique comprenant au moins une turbine à vapeur capable de produire au moins 1 MW d'énergie, l'eau d'alimentation pressurisée passant à travers au moins une membrane d'osmose inverse pour produire un jet de saumure résiduel et un produit d'eau, le procédé comprenant en outre une étape de régulation de la pression opérationnelle de la pompe à haute pression en modifiant la pression fournie par l'au moins une turbine à vapeur, la pompe à haute pression étant configurée pour tourner entre 500 et 5000 tours/minute en fonction de la pression appliquée par la turbine à vapeur afin de compenser les fluctuations de pression et de débit, dans lequel une vitesse opérationnelle plus basse est instaurée en réponse à des exigences de pression et de débit plus faibles causées par une ou plusieurs conditions sélectionnées parmi faible salinité, basse température de l'eau et faible demande d'eau, et dans lequel une vitesse opérationnelle plus élevée est instaurée en réponse à des exigences de pression et de débit plus élevés causées par une ou plusieurs conditions sélectionnées parmi salinité élevée, haute température de l'eau, membrane encrassée et forte demande d'eau, le procédé comprenant en outre une étape de démarrage dans laquelle la pression d'alimentation est augmentée à un taux maximum de 12 psi (8,3 Newtons/cm² ; 0,08 MPa) par seconde par rotation de la pompe à haute pression entraînée par turbine pour augmenter lentement la pression sur la membrane jusqu'à une pression opérationnelle prédéterminée.

2. Procédé selon la revendication 1, dans lequel l'augmentation de la pression d'alimentation au démarrage est égale ou inférieure à 10 psi (6,9 Newtons/cm² ; 0,07 MPa) par seconde pour parvenir à un démarrage en douceur assuré directement par une lente augmentation de la vitesse de rotation de la pompe à haute pression entraînée par turbine, de préférence à une vitesse maximale de 30 tours/minute durant le démarrage.

3. Procédé selon l'une quelconque des revendications précédentes, dans lequel l'eau d'alimentation est entraînée à travers de multiples membranes d'osmose inverse par de multiples pompes à haute pression alimentées par les sources non électriques comprenant au moins une turbine à vapeur.

4. Procédé selon l'une quelconque des revendications précédentes, dans lequel la pression opérationnelle de chaque pompe à haute pression est régulée en modifiant la pression de vapeur fournie par l'au moins une source non électrique comprenant au moins une turbine à vapeur.

5. Procédé selon la revendication 4, dans lequel un ou plusieurs contrôleurs sont fournis pour réguler la pression appliquée par chaque source non électrique comprenant au moins une turbine à vapeur à l'au moins une pompe à haute pression.

6. Procédé selon la revendication 5, dans lequel la sortie de chaque turbine à vapeur est régulée automatiquement par une entrée donnée liée à une condition de l'eau d'alimentation ou au volume d'eau d'alimentation requis.

7. Procédé selon l'une quelconque des revendications précédentes, dans lequel chaque turbine à vapeur fournit au moins 5 MW d'énergie.

8. Procédé selon l'une quelconque des revendications précédentes, comprenant en outre une étape de purge avant l'étape de démarrage, l'étape de purge comprenant la rotation de la pompe à haute pression entraînée par turbine à une vitesse de 300 à 800 tours/minute pour fournir une pression d'évacuation d'air inférieure à 5 Bar (0,5MPa ; 50 N/cm²).

9. Procédé selon la revendication 8, dans lequel l'étape de purge est exécutée pendant 30 à 60 minutes.

10. Procédé selon l'une quelconque des revendications précédentes, dans lequel l'eau d'alimentation est acheminée à travers de multiples membranes d'osmose inverse par de multiples pompes à haute pression.

11. Procédé selon l'une quelconque des revendications précédentes, dans lequel la sortie de ladite source non électrique est régulée par une entrée donnée liée à une condition de l'eau d'alimentation ou au volume d'eau d'alimentation requis.

12. Procédé selon l'une quelconque des revendications 2 à 11, dans lequel la vitesse maximale de rotation de la pompe à haute pression entraînée par turbine durant l'étape de démarrage est de 25 tours/minute.

13. Procédé selon l'une quelconque des revendications précédentes, dans lequel la pompe à haute pression augmente la rotation linéairement de 25 tours/minute par seconde.
